# EUROPEAN PATENT APPLICATION

(11) **EP 2 051 559 A2**
(43) Date of publication of application: **22.04.2009**
(21) Application number: 08166766.9
(22) Date of filing: 16.10.2008
(51) Int. Cl.: H04W 74/08

(54) **Method and apparatus imposing random delays for avoiding hidden terminal collisions in wireless Mesh networks**

(30) Priority: 17.10.2007 US 980641 P
(71) Applicant: Avaya Inc., Basking Ridge, New Jersey 07920 (US)
(72) Inventor: Benveniste, Mathilde, South Orange NJ 07079 (US)
(74) Representative: Williams, David John

(57) **Abstract**

A method, apparatus and computer program product for imposing random delays for avoiding hidden terminal collisions in wireless mesh networks is presented. A packet is forwarded from a first node to a second node along a multihop path to a destination node. The second node refrains from forwarding the packet to a next hop of the multihop path for a predetermined delay time period. The packet is then forwarded after the predetermined delay time period by the second node to the next hop of the multihop path.

## Description

### BACKGROUND

Wireless Local Area Networks (WLANS) have become ubiquitous. In wireless Local Area Networks (LANS), a wireless channel can be reserved for the transmission of a sequence of frames while employing asynchronous distributed random channel access methods. In such an environment, both the source and destination of the transmission broadcast the reservation duration in order to establish the interference neighborhood.

According to the 802.11 distributed channel access MAC protocol, RTS/CTS frames are used to notify neighbors of a transmission. The source and destination of the transmission the RTS and CTS frames, respectively, which contain the reservation duration in order to establish the interference neighborhood. Nodes receiving either frame refrain from transmitting or agreeing to receive a transmission for the specified duration. This way, 'hidden terminals', that is nodes that cannot hear the transmission by may cause interference to the receiving node, will refrain from transmitting for the duration indicated in the received CTS frame.

One method of reserving the channel and preventing collisions with hidden terminals in wireless LANS is by utilizing Frame-by-frame reservation. RTS/CTS frames are sent at the start of the reservation. The reservation time is extended on a frame-by-frame basis, by updating the duration of the reservation with each data frame and the acknowledgement that follows. A consequence of frame-by-frame reservation if that, if the reservation is not accepted - that is, a CTS frame is not returned in tine -- there is no reserved time left unused and, hence, the reservation does not require cancellation.

Another method of performing reservation in wireless LANS is by utilizing Start-to-finish reservation. A start-to-finish reservation applies to any combination of nodes (i.e. mesh points/APs/stations). A node reserves a channel to cover an entire sequence of transmissions, directed to a single destination, possibly including responses from the destination. Under this method, the channel may be reserved by setting the duration field value to the time it will to transmit the entire sequence of frames. If the reservation request is not authorized - that is, a CTS frame is not returned in tine -- or if time remains reserved at the completion of transmission, the reservation must be cancelled.

Cancellation of a reservation can be problematic in an 802.11 WLAN, because a node relies on a single timer, the NAV, in order to determine if the channel is available for transmission. When a node receives a frame with a value in the Duration field that would extend the occupancy of the channel beyond that of prior reservations, the NAV timer is updated to reflect the longer reservation. It is possible for a node to receive multiple NAV-setting frames from different sources. For instance, a node may receive a CTS frame from one neighbor, and an RTS from another neighbor, who has not received the CTS. Cancellation of the transmission associated with the RTS could be achieved either by listening for an idle channel, or by receiving an explicit cancellation of the reservation from the source of the RTS. If a node resets its NAV based on such a cancellation, it risks causing interference/collision to the neighbor that had sent the CTS frame if this neighbor is still receiving the transmission associated with that CTS frame. Because a single NAV timer is maintained, independently of the source of the NAV-setting request, there is no way to determine whether cancellation of a reservation should cause the NAV timer to be reset.

In spite of this deficiency, the start-to-finish NAV setting method is important because it affords protection from 'hidden terminals', a problem that is exacerbated in mesh networks because of the long distances between neighbors.

WLANS can include multiple channels and multiple radios. An approach that offers both multi-channel and multi-radio capabilities appears in the co-pending patent application titled "A Protocol For Wireless Multi-Channel Access Control ", Attorney docket number AVA06-01, filed March 29, 2006, the disclosure of which is incorporated by reference herein, which describes the CCC (Common Control Channel) MAC protocol. CCC utilizes two types of logical channels, the control channel and the data channels.

### SUMMARY

Conventional mechanisms such as those explained above suffer from a variety of deficiencies. One such deficiency arises as a result of the 'hidden terminal' problem. The hidden terminal problem arises when a station cannot hear the transmitter but is within interference range of the receiver. The problem is more serious in ad hoc networks with nodes separated by long distances, an example of which is found in a wireless mesh.

Typically, he hidden terminal problem can be alleviated through the exchange of the RTS/CTS control frames. However, when the distances separating nodes are long, neighbor nodes within interference range of the receiver of the transmission associated with the RTS/CTS pair may not outside the transmit range of the node sending the CTS, and, therefore, would be unable to read the CTS frame. Such neighbors would not be setting their NAV when the CTS is transmitted, and may thus cause interference to the receiving node. To avoid this problem, the RTS/CTS frames can be transmitted at a lower speed in order to increase the transmit range. A consequence of this measure is that reservation of the channel for a sequence of frames would have to be made on a start-to-finish basis. Individual data frames cannot be relied on to increase the reservation as such frames would be sent at higher speed and thus have a shorter transmit range.

The use of start-to-finish NAV setting requests, in addition to providing protection from hidden terminals, also enables the reservation of different channels in a multi-channel access control protocol. An example of a protocol is CCC. Control frames are exchanged on a control channel to reserve one of a pool of available data channels. In such a case, extension of a channel's reservation on a frame-by-frame basis would require the exchange of additional control frames on the control channel, which would be inefficient.

Conventional mechanisms such as those explained above suffer from a variety of deficiencies. One such deficiency is that in conventional wireless mesh networks, the high correlation in the transmissions a multi-hop flow causes flows that suffer hidden terminal collisions with one of the transmissions on a multi-hop flow to be delayed further by the remaining multi-hop transmissions.

Embodiments of the invention significantly overcome such deficiencies and provide mechanisms and techniques for imposing random delays for avoiding hidden terminal collisions in wireless mesh networks. To avoid the further delays, one could reduce the correlation between the consecutive transmissions of a frame traversing a multi-hop path by imposing random delays at each node along the multi-hop path. Such delays should be long enough to enable other contending nodes to count down its backoff and transmit.

In a particular embodiment of a method for imposing random delays for avoiding hidden terminal collisions in wireless mesh networks, the method includes forwarding a packet from a first node to a second node along a multihop path to a destination node. The method further includes refraining from forwarding the packet for a predetermined delay time period for the second node from the second node to a next hop of the multihop path. Additionally, the method includes forwarding the packet after the predetermined delay time period by the second node to the next hop of the multihop path.

Other embodiments include a computer readable medium having computer readable code thereon for imposing random delays for avoiding hidden terminal collisions in wireless mesh networks. The computer readable medium includes instructions for forwarding a packet from a first node to a second node along a multihop path to a destination node. The computer readable medium further includes instructions for refraining from forwarding the packet for a predetermined delay time period for the second node from the second node to a next hop of the multihop path. Additionally, the computer readable medium includes instructions for forwarding the packet after the predetermined delay time period by the second node to the next hop of the multihop path.

Still other embodiments include a computerized device, configured to process all the method operations disclosed herein as embodiments of the invention. In such embodiments, the computerized device includes a memory system, a processor, communications interface in an interconnection mechanism connecting these components. The memory system is encoded with a process that provides imposing random delays for avoiding hidden terminal collisions in wireless mesh networks as explained herein that when performed (e.g. when executing) on the processor, operates as explained herein within the computerized device to perform all of the method embodiments and operations explained herein as embodiments of the invention. Thus any computerized device that performs or is programmed to perform up processing explained herein is an embodiment of the invention.

Other arrangements of embodiments of the invention that are disclosed herein include software programs to perform the method embodiment steps and operations summarized above and disclosed in detail below. More particularly, a computer program product is one embodiment that has a computer-readable medium including computer program logic encoded thereon that when performed in a computerized device provides associated operations imposing random delays for avoiding hidden terminal collisions in wireless mesh networks as explained herein. The computer program logic, when executed on at least one processor with a computing system, causes the processor to perform the operations (e.g., the methods) indicated herein as embodiments of the invention. Such arrangements of the invention are typically provided as software, code and/or other data structures arranged or encoded on a computer readable medium such as an optical medium (e.g., CD-ROM), floppy or hard disk or other a medium such as firmware or microcode in one or more ROM or RAM or PROM chips or as an Application Specific Integrated Circuit (ASIC) or as downloadable software images in one or more modules, shared libraries, etc. The software or firmware or other such configurations can be installed onto a computerized device to cause one or more processors in the computerized device to perform the techniques explained herein as embodiments of the invention. Software processes that operate in a collection of computerized devices, such as in a group of data communications devices or other entities can also provide the system of the invention. The system of the invention can be distributed between many software processes on several data communications devices, or all processes could run on a small set of dedicated computers, or on one computer alone.

It is to be understood that the embodiments of the invention can be embodied strictly as a software program, as software and hardware, or as hardware and/or circuitry alone, such as within a data communications device. The features of the invention, as explained herein, may be employed in data communications devices and/or software systems for such devices such as those manufactured by Avaya, Inc. of Lincroft, New Jersey.

Note that each of the different features, techniques, configurations, etc. discussed in this disclosure can be executed independently or in combination. Accordingly, the present invention can be embodied and viewed in many different ways. Also, note that this summary section herein does not specify every embodiment and/or incrementally novel aspect of the present disclosure or claimed invention. Instead, this summary only provides a preliminary discussion of different embodiments and corresponding points of novelty over conventional techniques. For additional details, elements, and/or possible perspectives (permutations) of the invention, the reader is directed to the Detailed Description section and corresponding figures of the present disclosure as further discussed below.

### BRIEF DESCRIPTION OF THE DRAWINGS

The foregoing will be apparent from the following more particular description of preferred embodiments of the invention, as illustrated in the accompanying drawings in which like reference characters refer to the same parts throughout the different views. The drawings are not necessarily to scale, emphasis instead being placed upon illustrating the principles of the invention.

Figure 1 depicts a diagram of a wireless network showing a transmit range and an interference range of a node in the wireless network;

Figure 2 depicts a timing diagram of conventional frame-by-frame reservation in a wireless network;

Figure 3 depicts a timing diagram of conventional start-to-finish reservation in a wireless network;

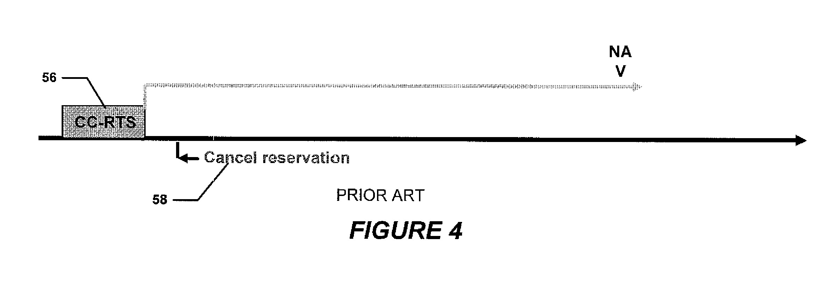

Figure 4 depicts a timing diagram showing a need for a reservation cancellation;

Figure 5 depicts a timing diagram showing a two-step reservation when a reservation has been cancelled in accordance with embodiments of the invention;

Figure 6 depicts a timing diagram showing a two-step reservation when a reservation has not been cancelled in accordance with embodiments of the invention;

Figures 7A and 7B comprises a flow diagram of a method of preventing hidden terminals in a wireless network in accordance with embodiments of the invention; and

Figure 8 comprises a block diagram of a node which operates in accordance with the present invention.

### DETAILED DESCRIPTION

Wireless LAN networks may utilize a Common Control Protocol (CCC). The CCC protocol is a MAC protocol that extends the IEEE 802.11 distributed MAC protocol to enable use of multiple channels within a BSS or mesh network. The CCC protocol defines a flexible channel access architecture based on distributed prioritized contention-based medium access. The CCC protocol distinguishes between two logical channel functions, the Control Channel (CC) and the Data Channel (DC). In the description that follows, stations or mesh points observing the CCC MAC protocol are referred to as 'nodes'. Nodes exchange control and management frames on the control channel. The data channels carry data traffic.

Reservations for transmission on the various data channels are made by exchanging control frames on the control channel. As extensions of the legacy RTS and CTS messages, the CC- RTS and CC-CTS are used to reserve a data channel for the time it takes to transmit a Transmission Opportunity (TXOP). A TXOP is a sequence of frames (and their respective acknowledgements) transmitted serially, immediately following a single successful contention-based channel access attempt, as for instance that prescribed by the IEEE 802.11e standard. The particular data channel selected for transmission of the TXOP is indicated in a special field on the CC-RTS/CC-CTS. The CC-RTS/CC-CTS exchange could be defined so that it can reserve multiple data channels, or a data channel and the control channel, for the same time interval. A node keeps track of the length of time for which a channel(s) is reserved in a channel-specific NAV, based on the value of the Reservation Duration field of the CC-RTS/CC-CTS.

Both the forwarding and receiving node maintain a NAV for each usable channel. A node monitors the control channel and keeps track of all reservations made by other nodes to determine the busy/idle status of data channels, and when they will become available. The Reservation Duration field on the CC-RTS/CC-CTS is used to update the NAV for the channel reserved. The CC-RTS/CC-CTS Reservation Duration field is different from the Duration/ID field in the MAC header of the CC-RTS/CC-CTS frames. The latter indicates the length of the CC-RTS/CC-CTS transmission on the control channel. A reservation request is declined if the receiving node deems the requested channel busy, or if all its radios are busy.

The receiving node responds with a CC-CTS within a time interval of length Short InterFrame Space (SIFS). A CC-CTS is sent to indicate acceptance of a channel reservation request. The Reservation Duration field is copied in the CC-CTS sent by the receiving node. If a CC-CTS is not received, the forwarding node assumes that the reservation request is declined. A reservation is accepted if the data channel indicated in the CC-RTS will become idle within a pre-specified time interval, according to the NAV maintained by the receiving node and if the receiving node has available radios to receive the transmission. Successful receipt of a data traffic transmission is followed by an acknowledgement sent either on the data channel according to EDCA rules or as a group acknowledgment on the control channel.

Different frames utilized include a CC-RTS frame, used by a node initiating a TXOP. This frame includes several fields including a source node; a destination node; a source node transmit channel; a duration and a number of frames in TXOP. A CC-CTS frame is used by a node accepting a TXOP. The CC-CTS frame includes several fields including a destination node; a source node; a source node transmit channel; a duration; a number of frames in TXOP; and a Radio Counter. A CC-ACK frame identifies the individual frame in a sequence of frames that were received successfully. The CC-ACK frame includes a destination node; source node; and a TXOP frame receipt status.

Channel Reservation occurs when the source node reserves its data channel for one or multiple frames by sending a CC-RTS frame to the destination node on the control channel, provided the Channel_State indication for the data channel is idle. The Reservation Duration field and number of TXOP frames are set in the CC-RTS. The destination node sends a CC-CTS in response within SIFS. The reservation request is accepted if the destination node has a Channel_State idle indication for the source node's data channel, and the destination node has available radios to receive the transmission; i.e. the Radio Counter is non-zero. If the reservation request is accepted by the Destination node, the Reservation Duration field is adjusted and the number of frames in the TXOP is repeated in the CC-CTS sent by the destination node and the CC-CTS includes the number of its radios that remain available to receive traffic - that is the Radio Counter. (The latter is not necessary, but it is useful to other nodes with frames to send to the destination node). If the reservation request is declined by the Destination node, the Reservation Duration field in the CC-CTS is set to 0 and the source node in that case sends another CC-RTS with a Reservation Duration field set to 0. Additionally, the destination node will send a CC-CTS with a 0 in the Reservation Duration field in response to a CC-RTS with a Reservation Duration field set to 0.

When all frames in a TXOP are transmitted, the destination node will acknowledge the status of the transmit sequence by sending an acknowledgement, called CC-ACK, on the control channel. The frames received successfully will be identified in the CC-ACK. The acknowledgement will be transmitted by contending at the highest access priority

To protect from hidden terminals, mesh networks require CC-RTS/CC-CTS reservations for the entire TXOP. If reservation request (CC-RTS) is denied, the source node must cancel reservation, to avoid wasting the reserved channel time. The Destination node indicates denial of CC-RTS by returning CC-CTS with Reservation duration of zero. A second CC-RTS is sent by the source node to notify neighbor nodes that heard the original CC-RTS. Resetting the NAVs of neighbors must be avoided, as cancellation of all other outstanding NAV-setting requests would result from resetting of NAVs. Accordingly, the NAV method is modified to avoid resetting NAVs.

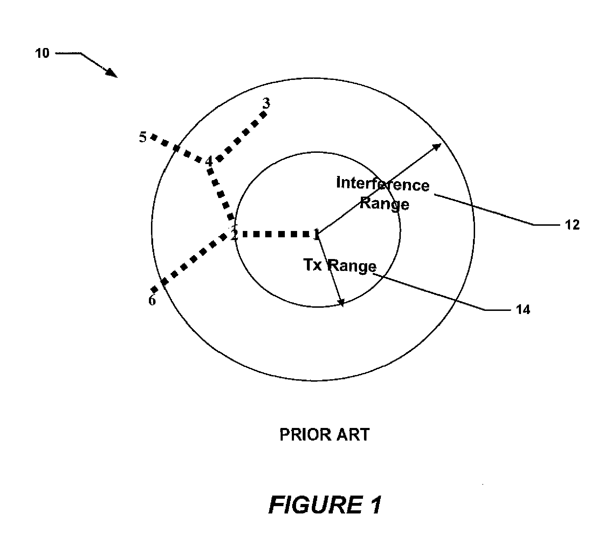

A hidden node is one that can interfere with the receipt of a transmission that it cannot hear. In a WLAN where stations can hear one another, the hidden node problem is addressed by using CC-RTS/CC-CTS. If, however, the transmitting and receiving nodes are sufficiently separated, as in the case of nodes in a WLAN mesh, CC-RTS/CC-CTS is not effective because the interference range is longer than the transmit range. The transmit range is the range within which all nodes can hear the transmission and are able to decode it Hidden nodes will be found within interference range of the destination of a transmission but outside of the transmit range. Consider the mesh illustrated in Figure 1. The wireless network 10 includes a plurality of nodes, nodes 1-6. Node 1 has an associated transmit range (TX Range) 14 and an associated interference range 12. Due to the spatial arrangement of a mesh, nodes can behave as hidden nodes. Interference range 12 of node 1 is the range within which existing communications of nodes can be disrupted by a transmission from node 1. Tx Range 14 of node 1 is the range within which all nodes can hear a transmission from node 1 and is able to decode the packet.

Node 1 sends a CC-RTS to node 2 and node 2 responds with a CC-CTS. Nodes 3 and 5, which are within interference range of node 2, are not within transmit range of node 2, so they do not hear the CC-CTS. As in the case of a BSS, to protect against hidden nodes, CC-RTS/CC-CTS must be used. Because of the distance separating potentially interfering nodes, the CC-RTS/CC-CTS must be sent at a more robust PHY mode than mesh traffic frames. That is, the CC-RTS/CC-CTS would be transmitted either at higher transmit power or a lower data rate than mesh traffic. This way, the transmit range for CC-RTS/CC-CTS could be the same as the interference range of mesh transmissions. The CC-RTS/CC-C TS can then be received and read at interference range. Reservations must be made for the entire TXOP using start-to-finish reservations.

Use of CC-RTS/CC-CTS to avoid hidden nodes gives rise to a problem in canceling reservations when transmitting a TXOP (a sequence of frames transmitted with a separation of a SIFS idle between them). According to the 802.11e draft, there are two ways to reserve channel time for the transmission of a TXOP. One is to reserve the channel for the reservation duration of the entire TXOP and the other is to reserve the channel for one frame at a time. Since a CC-RTS/CC-CTS is needed, a single CC-RTS/CC-CTS will reserve the channel for the entire TXOP duration. If the reservation request is not accepted, the reservation for the TXOP must be cancelled in order to enable use of the reserved channel for another transmission.

In the CCC MAC protocol, notification of denial of a reservation is communicated to all nodes by a second CC-RTS from the forwarding node containing a Reservation duration field set to zero. The forwarding node is notified of the denial of the request when it receives a CC-CTS with Reservation duration field set to zero. According to the 802.11 NAV rules, a node that hears a frame with a non-zero duration field updates its NAV for the channel to account for the expiration of the new duration value as well as all previous NAV-setting requests. A NAV is therefore the composite of multiple NAV-setting requests from different sources.

A node that hears notice of the cancellation of an earlier NAV-setting request cannot simply reset the NAV. Other NAV setting requests may be outstanding, as it is possible for a node to hear multiple NAV-setting requests for the same channel from nodes that cannot hear one another. Canceling a channel's NAV could thus lead to collisions. A different way is described below for setting the NAV of a channel when reservation is sought through a CC-RTS. The new NAV setting approach obviates the need for resetting a NAV when a reservation is cancelled.

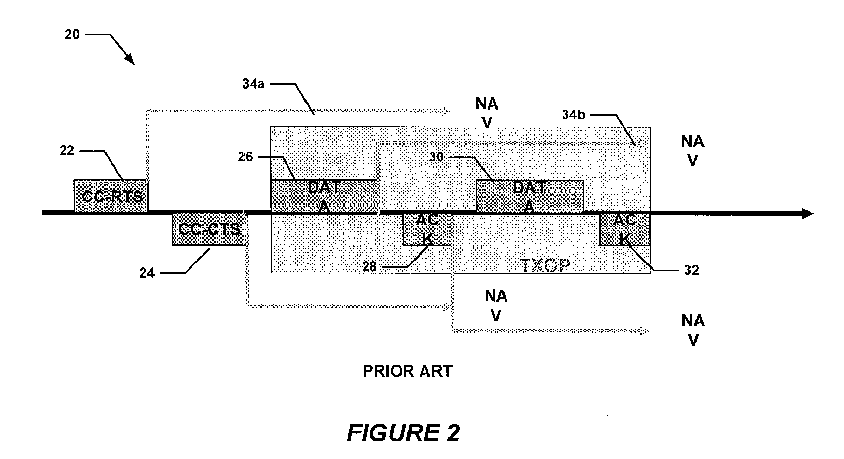

A wireless channel can be reserved for the transmission of a sequence of frames while using CSMA/CA. Both the source and destination of the transmission broadcast the reservation duration in order to establish the interference neighborhood. As discussed above, and as shown in Figure 2, a reservation can occur on a frame-by-frame basis. According to the 802.11 distributed channel access MAC protocol, RTS/ CTS frames are used to notify neighbors of the start of the reservation. The reservation time is extended on a frame-by-frame basis, by updating the reservation duration of the reservation with each data frame and the acknowledgement that follows. In this scenario 20, the NAV is set one frame at a time. The duration field of a data frame is used to extend the NAV. The RTS 22 sets the NAV 34a for the duration of the next frame 26 and it's ACK 28. When a CTS 24 is returned in response to the RTS 22, transmission of the data frame 26 begins with a Short Interface Space (SIFS)). The duration field of data frame 26 extends the NAV 34b for the duration of the next data frame 30 and ACK 32. If the reservation is denied, it does not require a reservation cancellation.

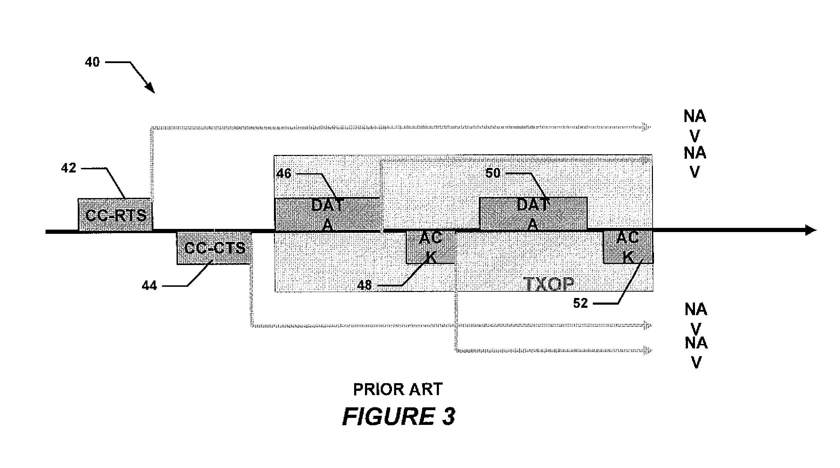

Referring now to Figure 3, reservation of the channel can be made with a single RTS/CTS for the entire sequence. The channel is reserved for the entire TXOP. The duration field in the RTS 42 is set to the time needed for the data frames 46 and 50, and the ACKs 48 and 52. Once the CTS 44 is returned, transmission of the Data frames 46 and 50 and the ACKs 48 and 52 begin within a SIFS time. If the reservation request is denied, or if time remains reserved at the completion of transmission, the remaining reservation time must be cancelled.

As shown in Figure the RTS 58 sets the NAV for the reservation duration value of the TXOP. In the event the reservation is not accepted (58), the remaining reservation time of the NAV should be cancelled to permit use of the channel.

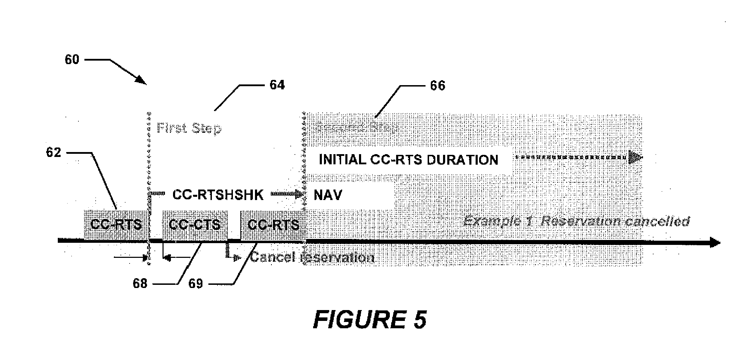

Referring now to Figure 5, in order to avoid hidden nodes, a two-step NAV setting process is utilized. The NAV is the time period other nodes must refrain from transmitting on the channel. To avoid collisions, each node keeps a NAV which is set according to the received reservation requests and responses. A reservation is requested with a CC-RTS 62 with a reservation duration set to the reservation length. The Destination node indicates denial of CC-RTS 62 by returning CC-CTS 68 with Reservation duration of zero. A second CC-RTS 69 with Reservation duration of zero is sent by source node to notify neighbor nodes that heard the original CC-RTS 62. In this scenario 60, the NAV is only set for the first step duration 64,the reservation duration of a CC-CTS/CC-RTS handshake. The NAV is not extended for second step 66 since the reservation was cancelled by receipt of the CC-CTS 68 having a reservation duration of zero. In response to a CC-CTS, or another frame, the NAV is updated according to the Reservation duration field. The NAV is updated when the Reservation duration field in the received frame requires extension of its expiration time. In Figure 5, the initial reservation for TXOP is cancelled when a second CC-RTS is heard from the same MP with Reservation duration set to 0, and therefore the NAV is not extended beyond the initial setting of CC-RTSHSHK.

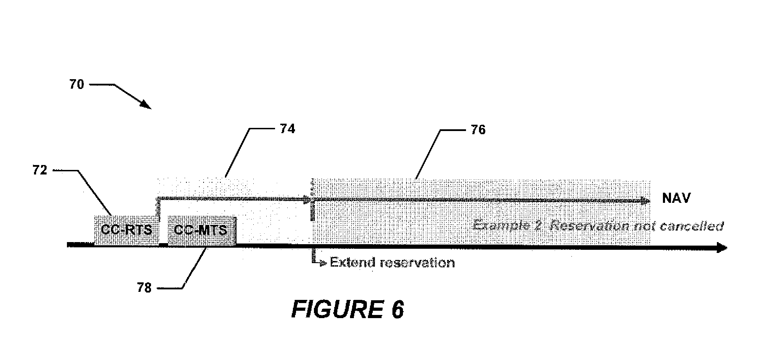

Referring now to Figure 6, a two-step NAV is shown when the reservation is not cancelled. In this scenario 70, the NAV is updated for the reservation duration of a CC-CTS/CC-RTS handshake 74. A station receiving a CC-RTS 72 will not update the NAV of that channel for the entire value of the Reservation duration field, but only for a time interval of length CC-RTSHSHK 74. If CC-RTS 72 is not cancelled (e.g., by receiving a CC-CTS 68 having a reservation duration value greater than zero), the NAV is updated for the remainder 76 of the initial CC-RTS 72 reservation duration. The reservation is not cancelled and therefore the NAV is extended to cover the entire reservation duration in the initial CC-RTS 72.

The CC-RTS 72 from the source node updates NAV for the time CC-RTSHSHK. This time period CC-RTSHSHK comprises the CC-CTS transmit time plus the CC-RTS transmit time plus the time for the two SIFS associated with the CC-CTS and the CC-RTS (CC-CTSTxTime+CC-RTSTxTime + 2*SIFS). A background timer is used to update the main NAV timer after a time interval CC-RTSHSHK has elapsed. If multiple CC-RTS frames are received within a time interval CC-RTSHSHK, a station must remember the (source ID, reservation duration) pair of each CC-RTS received. This information must be remembered until the NAV is updated for the full CC-RTS reservation duration. A station may retain information for a limited number of CC-RTS, those with the longest residual reservation duration.

In summary, the NAV of a channel is set in two steps when hearing a CC-RTS. Upon receipt of initial CC-RTS, a node updates the NAV for the specified channel for the time interval CC-RTSHSHK needed to transmit a CC-CTS and another CC-RTS. If a cancellation CC-RTS is not received, a node then sets the NAV for the remaining Reservation duration value indicated in the initial CC-RTS or the extended Reservation duration value indicated in a subsequent CC-RTS. If the reservation is declined, the NAV expires without the need for further action.

While the present application has been described with respect to a WLAN having multiple channels, similar concepts apply in a scenario with only a single channel is used. In this single channel scenario, neighbor nodes must be alerted when a reservation is cancelled. The NAV clearing mechanism is an optional mechanism in the standard which allows a station to clear its NAV if the station used information from an RTS frame as the most recent basis to update its NAV and there is no signal detected for 2 SIFS + CTS_duration + 2 SlotTime [IEEE 802.11:9.2.5.4]. This allows reuse of the channel in case the 4-way handshake cannot be completed. In order to avoid collisions caused by NAV clearing the following is used: A station remembers whether the duration of a CTS has expired. If not, the CTS is 'pending'. A flag CTS_PENDING is set when a new CTS arrives with non-zero Duration field. The flag is cleared when the NAV expires. A station will clear its NAV, if the channel is idle for specified time interval, and the flag CTS_PENDING is clear. If the flag CTS_PENDING is set, the station does not clear the NAV. This allows for collision avoidance caused by NAV clearing.

The high correlation in the transmissions of a multi-hop flow causes flows that suffer hidden terminal collisions with one of the transmissions on a multi-hop flow to be delayed further by the remaining multi-hop transmissions. To avoid the further delays, one could reduce the correlation between the consecutive transmissions of a frame traversing a multi-hop path by imposing random delays at each node along the multi-hop path. Such delays should be long enough to enable other contending nodes to count down its backoff and transmit.

Random delays can be introduced as follows. A wider contention window for backoff at the forwarding nodes would provide another flow suffering a hidden terminal collision a chance to get on the channel. For example, the default size of the initial contention window for the top priority access category is set to 8 and is doubled for each retransmission attempt. A node receiving a frame that it must forward, may start with a contention window of 16 and be quadrupled for each retransmission attempt. A contention window offset (the lowest backoff possible) at the forwarding nodes would ensure a minimum wait before accessing the channel. For example, a node receiving a frame that it must forward, it shall add the equivalent of 200 microseconds in time slots it random backoff delay it draws before transmitting the frame. A pre-specified waiting time shall be required before a forwarding node engages in backoff in order to increase the time the channel is free for use by other flows. For example, a node receiving a frame that it must forward, shall not invoke backoff for 200 microseconds. Processing of the received frame may take place during this waiting time.

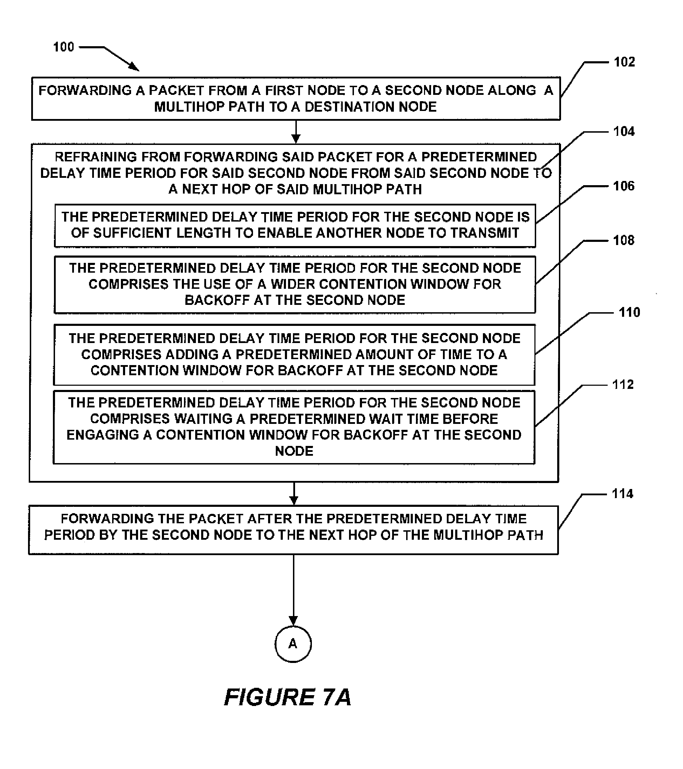

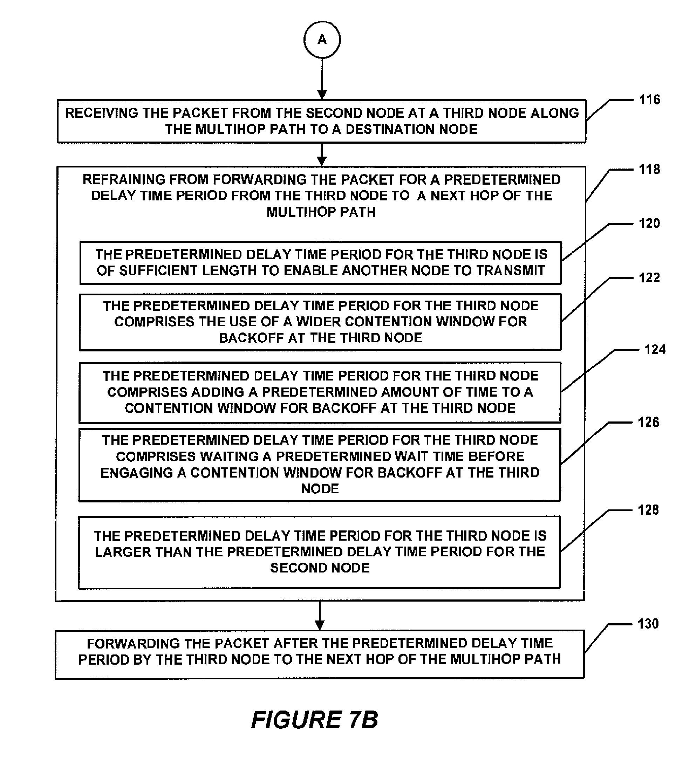

A flow chart of the presently disclosed method is depicted in Figures 7A and 7B. The rectangular elements are herein denoted "processing blocks" and represent computer software instructions or groups of instructions. Alternatively, the processing and decision blocks represent steps performed by functionally equivalent circuits such as a digital signal processor circuit or an application specific integrated circuit (ASIC). The flow diagrams do not depict the syntax of any particular programming language. Rather, the flow diagrams illustrate the functional information one of ordinary skill in the art requires to fabricate circuits or to generate computer software to perform the processing required in accordance with the present invention. It should be noted that many routine program elements, such as initialization of loops and variables and the use of temporary variables are not shown. It will be appreciated by those of ordinary skill in the art that unless otherwise indicated herein, the particular sequence of steps described is illustrative only and can be varied without departing from the spirit of the invention. Thus, unless otherwise stated the steps described below are unordered meaning that, when possible, the steps can be performed in any convenient or desirable order.

Referring now to Figures 7A and 7B, a method 100 of imposing random delays for avoiding hidden terminal collisions in wireless mesh networks is shown. Method 100 begins with processing block 102 which discloses forwarding a packet from a first node to a second node along a multihop path to a destination node.

Processing block 104 states refraining from forwarding the packet for a predetermined delay time period for the second node from the second node to a next hop of the multihop path. As shown in processing blocks 106, 108, 110, and 112, the predetermined delay time period can be provided in various forms. Processing block 106 recites wherein the predetermined delay time period for the second node is of sufficient length to enable another node to transmit. Processing block 108 discloses wherein the predetermined delay time period for the second node comprises the use of a wider contention window for backoff at the second node. Processing block 110 states the predetermined delay time period for the second node comprises adding a predetermined amount of time to a contention window for backoff at the second node. Processing block 112 recites wherein the predetermined delay time period for the second node comprises waiting a predetermined wait time before engaging a contention window for backoff at the second node.

Processing block 114 discloses forwarding the packet after the predetermined delay time period by the second node to the next hop of the multihop path.

Processing continues with processing block 116 which states receiving the packet from the second node at a third node along the multihop path to a destination node.

Processing block 118 states refraining from forwarding the packet for a predetermined delay time period for the third node from the second node to a next hop of the multihop path. As shown in processing blocks 120, 122, 124, 126 and 128, the predetermined delay time period can be provided in various forms. Processing block 120 recites wherein the predetermined delay time period for the third node is of sufficient length to enable another node to transmit. Processing block 122 discloses wherein the predetermined delay time period for the third node comprises the use of a wider contention window for backoff at the third node. Processing block 124 states the predetermined delay time period for the third node comprises adding a predetermined amount of time to a contention window for backoff at the third node. Processing block 126 recites wherein the predetermined delay time period for the third node comprises waiting a predetermined wait time before engaging a contention window for backoff at the third node. Processing block 128 discloses wherein the predetermined delay time period for the third node is larger than the predetermined delay time period for the second node.

Processing block 130 states forwarding the packet after the predetermined delay time period for the third node by the third node to the next hop of the multihop path.

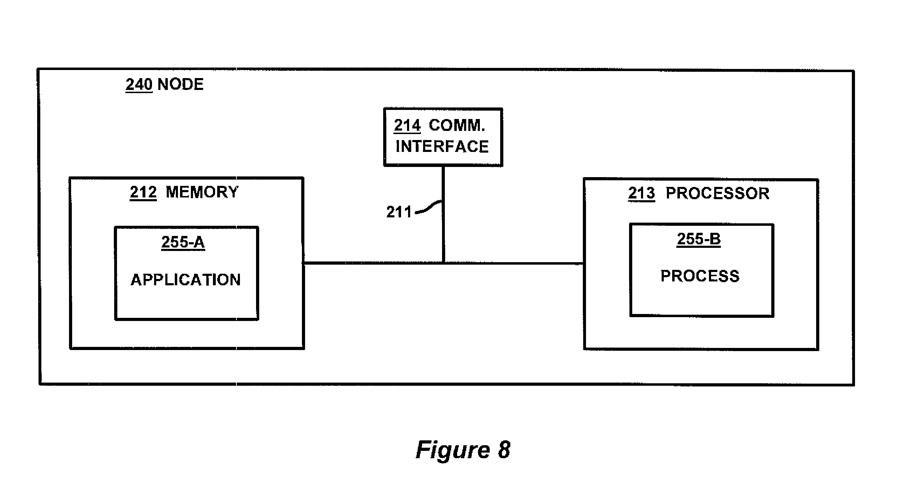

Figure 8 illustrates example architectures of a computer system that is configured as a host computer system 240. The computer system 240 may be any type of computerized system such as a personal computer, workstation, portable computing device, mainframe, server or the like. In this example, the system includes an interconnection mechanism 211 that couples a memory system 212, a processor 213, and a communications interface 214. The communications interface 214 allows the computer system 240 to communicate with external devices or systems.

The memory system 212 may be any type of computer readable medium that is encoded with an application 255-A that represents software code such as data and/or logic instructions (e.g., stored in the memory or on another computer readable medium such as a disk) that embody the processing functionality of embodiments of the invention for the agent 255 as explained above. The processor 213 can access the memory system 212 via the interconnection mechanism 211 in order to launch, run, execute, interpret or otherwise perform the logic instructions of the applications 255-A for the host in order to produce a corresponding agent process 255-B. In other words, the agent process 255-B represents one or more portions of the agent application 255-A performing within or upon the processor 2I3 in the computer system. It is to be understood that the agent 255 operate as explained in former examples are represented in Figure 8 by the agent application 255-A and/or the process 255-B.

It is to be understood that embodiments of the invention include the applications (i.e., the un-executed or non-performing logic instructions and/or data) encoded within a computer readable medium such as a floppy disk, hard disk or in an optical medium, or in a memory type system such as in firmware, read only memory (ROM), or, as in this example, as executable code within the memory system 2I2 (e.g., within random access memory or RAM). It is also to be understood that other embodiments of the invention can provide the applications operating within the processor 213 as the processes. While not shown in this example, those skilled in the art will understand that the computer system may include other processes and/or software and hardware components, such as an operating system, which have been left out of this illustration for ease of description of the invention.

The device(s) or computer systems that integrate with the processor(s) may include, for example, a personal computer(s), workstation(s) (e.g., Sun, HP), personal digital assistant(s) (PDA(s)), handheld device(s) such as cellular telephone(s), laptop(s), handheld computer(s), or another device(s) capable of being integrated with a processor(s) that may operate as provided herein. Accordingly, the devices provided herein are not exhaustive and are provided for illustration and not limitation.

References to "a microprocessor" and "a processor", or "the microprocessor" and "the processor," may be understood to include one or more microprocessors that may communicate in a stand-alone and/or a distributed environment(s), and may thus be configured to communicate via wired or wireless communications with other processors, where such one or more processor may be configured to operate on one or more processor-controlled devices that may be similar or different devices. Use of such "microprocessor" or "processor" terminology may thus also be understood to include a central processing unit, an arithmetic logic unit, an application-specific integrated circuit (IC), and/or a task engine, with such examples provided for illustration and not limitation.

Furthermore, references to memory, unless otherwise specified, may include one or more processor-readable and accessible memory elements and/or components that may be internal to the processor-controlled device, external to the processor-controlled device, and/or may be accessed via a wired or wireless network using a variety of communications protocols, and unless otherwise specified, may be arranged to include a combination of external and internal memory devices, where such memory may be contiguous and/or partitioned based on the application. Accordingly, references to a database may be understood to include one or more memory associations, where such references may include commercially available database products (e.g., SQL, Informix, Oracle) and also proprietary databases, and may also include other structures for associating memory such as links, queues, graphs, trees, with such structures provided for illustration and not limitation.

References to a network, unless provided otherwise, may include one or more intranets and/or the Internet, as well as a virtual network. References herein to microprocessor instructions or microprocessor-executable instructions, in accordance with the above, may be understood to include programmable hardware.

Unless otherwise stated, use of the word "substantially" may be construed to include a precise relationship, condition, arrangement, orientation, and/or other characteristic, and deviations thereof as understood by one of ordinary skill in the art, to the extent that such deviations do not materially affect the disclosed methods and systems.

Throughout the entirety of the present disclosure, use of the articles "a" or "an" to modify a noun may be understood to be used for convenience and to include one, or more than one of the modified noun, unless otherwise specifically stated.

Elements, components, modules, and/or parts thereof that are described and/or otherwise portrayed through the figures to communicate with, be associated with, and/or be based on, something else, may be understood to so communicate, be associated with, and or be based on in a direct and/or indirect manner, unless otherwise stipulated herein.

Although the methods and systems have been described relative to a specific embodiment thereof, they are not so limited. Obviously many modifications and variations may become apparent in light of the above teachings. Many additional changes in the details, materials, and arrangement of parts, herein described and illustrated, may be made by those skilled in the art.

Having described preferred embodiments of the invention it will now become apparent to those of ordinary skill in the art that other embodiments incorporating these concepts may be used. Additionally, the software included as part of the invention may be embodied in a computer program product that includes a computer useable medium. For example, such a computer usable medium can include a readable memory device, such as a hard drive device, a CD-ROM, a DVD-ROM, or a computer diskette, having computer readable program code segments stored thereon. The computer readable medium can also include a communications link, either optical, wired, or wireless, having program code segments carried thereon as digital or analog signals. Accordingly, it is submitted that that the invention should not be limited to the described embodiments but rather should be limited only by the spirit and scope of the appended claims.

## Claims

1. A method comprising:
forwarding a packet from a first node to a second node along a multihop path to a destination node;
refraining from forwarding said packet for a predetermined delay time period for said second node from said second node to a next hop of said multihop path; and
forwarding said packet after said predetermined delay time period by said second node to said next hop of said multihop path.

2. The method of claim 1 wherein said predetermined delay time period for said second node is of sufficient length to enable another node to transmit.

3. The method of claim 1 wherein said predetermined delay time period for said second node comprises the use of a wider contention window for backoff at said second node.

4. The method of claim 1 wherein said predetermined delay time period for said second node comprises adding a predetermined amount of time to a contention window for backoff at said second node.

5. The method of claim 1 wherein said predetermined delay time period for said second node comprises waiting a predetermined wait time before engaging a contention window for backoff at said second node.

6. The method of claim 1 further comprising:
receiving said packet from said second node at a third node along said multihop path to a destination node;
refraining from forwarding said packet for a predetermined delay time period from said third node to a next hop of said multihop path; and
forwarding said packet after said predetermined delay time period for said third node by said third node to said next hop of said multihop path.

7. The method of claim 6 wherein said predetermined delay time period for said third node is of sufficient length to enable another node to transmit.

8. The method of claim 6 wherein said predetermined delay time period for said third node comprises the use of a wider contention window for backoff at said third node.

9. The method of claim 6 wherein said predetermined delay time period for said third node comprises adding a predetermined amount of time to a contention window for backoff at said third node.

10. The method of claim 6 wherein said predetermined delay time period for said third node comprises waiting a predetermined wait time before engaging a contention window for backoff at said third node.

11. The method of claim 6 wherein said predetermined delay time period for said third node is larger than said predetermined delay time period for said second node.

12. A computer readable medium having computer readable code thereon for imposing random delays for avoiding hidden terminal collisions in wireless mesh networks, the medium comprising:
instructions for forwarding a packet from a first node to a second node along a multihop path to a destination node;
instructions for refraining from forwarding said packet for a predetermined delay time period for said second node from said second node to a next hop of said multihop path; and
instructions for forwarding said packet after said predetermined delay time period by said second node to said next hop of said multihop path.

13. The computer readable medium of claim 12 further comprising:
instructions for receiving said packet from said second node at a third node along said multihop path to a destination node;
instructions for refraining from forwarding said packet for a predetermined delay time period from said third node to a next hop of said multihop path; and
instructions for forwarding said packet after said predetermined delay time period for said third node by said third node to said next hop of said multihop path.

14. A computer system comprising:
a memory;
a processor;
a communications interface;
an interconnection mechanism coupling the memory, the processor and the communications interface; and
wherein the memory is encoded with an application imposing random delays for avoiding hidden terminal collisions in wireless mesh networks, that when performed on the processor, provides a process for processing information, the process causing the computer system to perform the operations of:
forwarding a packet from a first node to a second node along a multihop path to a destination node;
refraining from forwarding said packet for a predetermined delay time period for said second node from said second node to a next hop of said multihop path; and
forwarding said packet after said predetermined delay time period by said second node to said next hop of said multihop path.

15. A computer system of claim 14 wherein the process further causes the computer system to perform the operations of:
receiving said packet from said second node at a third node along said multihop path to a destination node;
refraining from forwarding said packet for a predetermined delay time period from said third node to a next hop of said multihop path; and
forwarding said packet after said predetermined delay time period for said third node by said third node to said next hop of said multihop path.
